# EUROPÄISCHE PATENTANMELDUNG

(11) **EP 3 712 398 A1**
(43) Veröffentlichungstag der Anmeldung: **23.09.2020**
(21) Anmeldenummer: 20162567.0
(22) Anmeldetag: 12.03.2020
(51) Int. Cl.: F01N 3/28, F01N 3/10, B01D 46/24

(54) **SUBSTRAT FÜR EINE ABGASBEHANDLUNGSEINHEIT**

(30) Priorität: 22.03.2019 DE 102019107386
(71) Anmelder: Eberspächer Exhaust Technology GmbH, 66539 Neunkirchen (DE)
(72) Erfinder: Spieth, Arnulf, 73269 Hochdorf (DE)
(74) Vertreter: Ruttensperger Lachnit Trossin Gomoll

(57) **Zusammenfassung**

Ein Substrat für eine Abgasbehandlungseinheit, insbesondere für eine Abgasanlage einer Brennkraftmaschine, umfasst einen in einer Substrat-Längsrichtung (S) langgestreckten Substratkörper (18), wobei der Substratkörper (18) in einer Abflachungsrichtung (A) im Wesentlichen orthogonal zur Substrat-Längsrichtung (S) abgeflacht ist, wobei in dem Substratkörper (18) eine Vielzahl von im Wesentlichen in der Substrat-Längsrichtung (S) sich erstreckenden, Strömungskanäle bereitstellenden Zellen (24) gebildet ist, wobei die Zellen (24) von im Wesentlichen in der Substrat-Längsrichtung (S) verlaufenden Zellenwänden (20, 22) begrenzt sind, wobei die Zellenwände (20, 22) bezüglich der Abflachungsrichtung (A) angewinkelt sind.

## Beschreibung

Die Erfindung betrifft ein Substrat für eine Abgasbehandlungseinheit, insbesondere für eine Abgasanlage einer Brennkraftmaschine, sowie eine mit einem derartigen Substrat aufgebaute Abgasbehandlungseinheit.

Abgasbehandlungseinheiten, wie zum Beispiel Katalysatoren in Abgasanlagen von Brennkraftmaschinen in Fahrzeugen, sind im Allgemeinen mit einem Substrat aufgebaut, das einen mit einem zur Behandlung von Abgas geeigneten Material, wie zum Beispiel Katalysatormaterial, beschichteten Substratkörper aufweist. In dem beispielsweise mit Keramikmaterial aufgebauten Substratkörper ist eine Vielzahl von in einer Substrat-Längsrichtung sich erstreckenden Zellen gebildet, wobei jede derartige Zelle von dem zu behandelnden Abgas im Wesentlichen in der Substrat-Längsrichtung durchströmbar ist und somit einen Strömungskanal für das zu behandelnde Abgas bereitstellt. Auf diese Art und Weise wird eine sehr große von Abgas umströmbare Oberfläche bereitgestellt, in deren Bereich beispielsweise durch Wechselwirkung mit katalytisch wirksamem Material eine Abgasbehandlung zur Verringerung des im Abgas enthaltenen Schadstoffanteils ablaufen kann.

Derartige Substrate sind im Allgemeinen in einem Gehäuse mit einer rohrartigen Umfangswandung aufgenommen. Für eine stabile Halterung der Substrate in einer derartigen Umfangswandung werden die Substrate mit Fasermatten umwickelt, welche beim Einpressen der Substrate in die rohrartige Umfangswandung komprimiert werden und dann zwischen einer jeweiligen Umfangswandung und dem Außenumfang eines darin aufgenommenen Substrats eine dieses stabil an der Umfangswandung haltende Haltewirkung entfalten.

Es ist die Aufgabe der vorliegenden Erfindung, ein Substrat für eine Abgasbehandlungseinheit, insbesondere für eine Abgasanlage einer Brennkraftmaschine, vorzusehen, welches eine erhöhte Festigkeit gegen von außen auf dieses ausgeübte Belastungen aufweist.

Gemäß der vorliegenden Erfindung wird diese Aufgabe gelöst durch ein Substrat für eine Abgasbehandlungseinheit, insbesondere für eine Abgasanlage einer Brennkraftmaschine, umfassend einen in einer Substrat-Längsrichtung langgestreckten Substratkörper, wobei der Substratkörper in einer Abflachungsrichtung im Wesentlichen orthogonal zur Substrat-Längsrichtung abgeflacht ist, wobei in dem Substratkörper eine Vielzahl von im Wesentlichen in der Substrat-Längsrichtung sich erstreckenden, Strömungskanäle bereitstellenden Zellen gebildet ist, wobei die Zellen von im Wesentlichen in der Substrat-Längsrichtung verlaufenden Zellenwänden begrenzt sind, wobei die Zellenwände bezüglich der Abflachungsrichtung angewinkelt sind.

Vor allem abgeflachte, also beispielsweise mit elliptischer Außenkontur ausgebildete Substrate zeigen bei Druckbelastung von radial außen bezüglich der Substrat-Längsrichtung die Neigung, sich in Richtung der Abflachungsrichtung auszudehnen. Durch das Anwinkeln der Zellenwände bezüglich der Abflachungsrichtung, also das Anordnen derart, dass die Zellenwände weder parallel, noch orthogonal zur Abflachungsrichtung verlaufen, wird eine bessere Lastverteilung bei Belastung von radial außen erreicht, wodurch die Gefahr einer Rissbildung im Substratkörper durch lokal übermäßig hohe Flächenpressung deutlich gemindert wird.

Für eine stabile, gleichwohl zur Aufnahme hoher Belastungen von außen geeignete Ausgestaltung wird vorgeschlagen, dass zueinander parallele und mit Abstand zueinander angeordnete erste Zellenwände und zueinander parallele und mit Abstand zueinander angeordnete zweite Zellenwände vorgesehen sind, wobei die ersten Zellenwände bezüglich der zweiten Zellenwände angewinkelt sind, derart, dass die Zellen jeweils von zwei ersten Zellenwänden und zwei zweiten Zellenwänden umgrenzt sind, was bei einer besonders bevorzugten Ausgestaltung bedeutet, dass die Zellen nur durch jeweils zwei zueinander parallele erste Zellenwände und zwei zueinander parallele zweite Zellenwände, insgesamt also vier Zellenwände, umgrenzt sind. Dabei können für eine besonders gleichmäßige Lastverteilung die ersten Zellenwände bezüglich der zweiten Zellenwände unter einem Winkel von etwa 90° angewinkelt sein.

Für eine homogene Struktur im Inneren des Substratkörpers wird vorgeschlagen, dass der gegenseitige Abstand unmittelbar benachbarter erster Zellenwände zueinander im Wesentlichen dem gegenseitigen Abstand unmittelbar benachbarter zweiter Zellenwände zueinander entspricht.

In dem Substratkörper können Zellenlinien mit zueinander benachbarten Zellen gebildet sein, wobei die Zellen einer Zellenlinie durch die beiden gleichen ersten Zellenwände oder die beiden gleichen zweiten Zellenwände begrenzt sind. Dies bedeutet, dass die die Zellen jeweiliger Zellenlinien begrenzenden ersten bzw. zweiten Zellenwände entlang allen einer jeweiligen Zellenlinie zugeordneten Zellen im Wesentlichen unterbrechungsfrei durchlaufen und sich beispielsweise von einem Angrenzungsbereich an einen Außenumfangsbereich des Substratkörpers bis zu einem Angrenzungsbereich an einen entgegengesetzt liegenden Außenumfangsbereich des Substratkörpers erstrecken können.

Dabei können die ersten Zellenwände und zweite Zellenwände eine gitterartige Zellenwandstruktur bilden. Ferner sind für eine in sich stabile Struktur vorzugsweise die ersten Zellenwände und die zweiten Zellenwände im Wesentlichen ungekrümmt, wobei weiter bevorzugt die Zellen eine im Wesentlichen rechteckige, vorzugsweise quadratische Querschnittskontur aufweisen. Ferner kann eine sehr gute Lastverteilung bei Beaufschlagung von außen erreicht werden, wenn die Zellenwände bezüglich der Abflachungsrichtung in einem Bereich von 40° bis 50°, vorzugsweise mit etwa 45°, angewinkelt sind.

Zum Bereitstellen einer symmetrischen, gleichwohl abgeflachten Außenumfangskontur des Substrats wird vorgeschlagen, dass der Substratkörper mit bezüglich einer in der Abflachungsrichtung und in der Substrat-Längsrichtung ausgedehnten ersten Längs-Mittenebene im Wesentlichen spiegelsymmetrischer Außenumfangskontur ausgebildet ist, oder/und dass der Substratkörper mit bezüglich einer orthogonal zur Abflachungsrichtung und in der Substrat-Längsrichtung ausgedehnten zweiten Längs-Mittenebene im Wesentlichen spiegelsymmetrischer Außenumfangskontur ausgebildet ist,

Wenn der Substratkörper eine abgeflacht runde, vorzugsweise im Wesentlichen elliptische Außenumfangskontur aufweist, können in Ecken oder Kantenbereichen entstehende Belastungsspitzen vermieden werden. Ferner ist für ein einfaches Einführen des Substrats in ein rohrartiges Gehäuse der Substratkörper vorzugsweise bezüglich der Substrat-Längsrichtung im Wesentlichen zylindrisch ausgebildet ist.

Für eine thermisch stabile und gegen Umgebungseinflüsse resistente Ausgestaltung wird vorgeschlagen, dass der Substratkörper mit Keramikmaterial aufgebaut ist. Ferner können für eine effiziente Abgasbehandlung die Zellenwände mit Abgasbehandlungsmaterial, vorzugsweise Katalysatormaterial, beschichtet sein.

Die vorliegende Erfindung betrifft ferner eine Abgasbehandlungseinheit, insbesondere für eine Abgasanlage einer Brennkraftmaschine, umfassend ein Gehäuse mit einer einen Gehäuseinnenraum umgebenden, rohrartigen Umfangswandung und wenigstens ein in dem Innenraum angeordnetes Substrat mit erfindungsgemäßem Aufbau.

Für eine stabile, gleichwohl einfach herzustellende Halterung wird vorgeschlagen, dass wenigstens ein, vorzugsweise jedes in dem Innenraum angeordnete Substrat von wenigstens einer das Substrat bezüglich der Umfangswandung abstützenden Abstützmateriallage umgeben ist.

In Anpassung an die Formgebung eines erfindungsgemäß aufgebauten Substrats kann auch die Umfangswandung in der Abflachungsrichtung abgeflacht sein. Insbesondere kann die Umfangswandung eine abgeflacht runde, vorzugsweise im Wesentlichen elliptische Außenumfangskontur aufweisen.

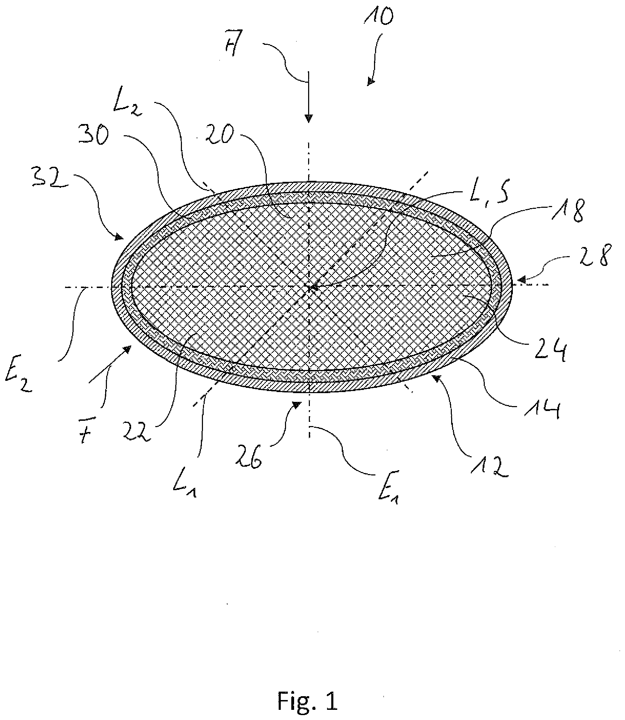

Die vorliegende Erfindung wird nachfolgend mit Bezug auf die beiliegende Fig. 1 detailliert beschrieben, welche eine Querschnittsdarstellung einer Abgasbehandlungseinheit mit einem in einem rohrartigen Gehäuse aufgenommenen Substrat zeigt.

In der Fig. 1 ist eine Abgasbehandlungseinheit, beispielsweise Katalysatoreinheit, für eine Abgasanlage einer Brennkraftmaschine in einem Fahrzeug allgemein mit 10 bezeichnet. Die Abgasbehandlungseinheit 10 umfasst ein rohrartiges Gehäuse 12 mit einer zur Zeichenebene der Fig. 1 orthogonalen Längs-Mittenachse L. Das Gehäuse 12 umfasst eine beispielsweise mit Blechmaterial aufgebaute Umfangswandung 14, die in einer Abflachungsrichtung A abgeflacht ist und somit im dargestellten Beispiel eine abgeflacht runde, beispielsweise elliptische Außenumfangskontur aufweist.

In dem von der Umfangswandung 14 umgebenen Innenraum des Gehäuses 12 ist ein allgemein mit 16 bezeichnetes Substrat angeordnet. Das Substrat 16 weist einen beispielsweise mit Keramikmaterial aufgebauten Substratkörper 18 auf. In dem Substratkörper 18 ist eine Vielzahl von Zellen 24 gebildet, die von in einer Substrat-Längsrichtung S, welche im dargestellten Beispiel im Wesentlichen der Erstreckungsrichtung der Längs-Mittenachse L entspricht, sich erstreckenden ersten Zellenwänden 20 und zweiten Zellenwänden 22 umgrenzt sind. Die ersten Zellenwände 20 und die zweiten Zellenwände 22 sind bezüglich der Abflachungsrichtung A angewinkelt und weisen im dargestellten Beispiel zu dieser einen Winkel von etwa 45° auf. Dabei erstrecken in der Darstellung der Fig. 1 die ersten Zellenwände 20 sich schräg von links unten nach rechts oben bzw. umgekehrt, während die zweiten Zellenwände 22 sich schräg von rechts unten nach links oben bzw. umgekehrt erstrecken. Da sowohl die ersten Zellenwände 20, als auch die zweiten Zellenwände 22 bezüglich der Abflachungsrichtung unter einem Winkel von etwa 45° angewinkelt sind, stehen die ersten Zellenwände 20 und zweiten Zellenwände 22 näherungsweise orthogonal aufeinander. Da weiterhin die ersten Zellenwände 20 und auch die zweiten Zellenwände 22 sich im Wesentlichen unterbrechungsfrei jeweils zwischen zwei Außenumfangsbereichen des Substratkörpers 18 erstrecken, ergibt sich eine gitterartige Struktur der Zellenwände 20, 22, bei welcher die jeweils von zwei einander unmittelbar benachbarten ersten Zellenwänden 20 und zwei einander unmittelbar benachbarten zweiten Zellenwänden 22 umgrenzten Zellen 24 eine rechteckige Querschnittskontur aufweisen. Da weiterhin bei einer besonders bevorzugten Ausgestaltung der gegenseitige Abstand aller einander unmittelbar benachbarter erster Zellenwände 20 im Wesentlichen dem gegenseitigen Abstand aller einander unmittelbar benachbarter zweiter Zellenwände 22 entspricht, weisen die Zellen 24 auch eine quadratische Querschnittskontur auf.

Zwischen den bezüglich der Abflachungsrichtung A angewinkelten, zueinander parallel liegenden ersten Zellenwänden 20 sind durch eine Linie L₁ in Figur 1 veranschaulichte erste Zellenlinien von in Richtung der Linie L₁ einander benachbarten bzw. aufeinanderfolgenden Zellen 24 gebildet. Gleichermaßen sind zwischen den bezüglich der Abflachungsrichtung A angewinkelten, zueinander parallel liegenden zweiten Zellenwänden 22 durch eine Linie L₂ in Figur 1 veranschaulichte zweite Zellenlinien von in Richtung der Linie L₂ einander benachbarten bzw. aufeinanderfolgenden Zellen 24 gebildet. Alle Zellen 24 in einer jeweiligen ersten Zellenlinie L₁ sind durch die beiden gleichen ersten Zellenwände 20 begrenzt, und alle Zellen 24 in einer jeweiligen zweiten Zellenlinie L₂ sind durch die beiden gleichen zweiten Zellenwände 22 begrenzt.

Das Substrat 16 weist in Anpassung an die Querschnittskontur der Umfangswandung 14 eine abgeflacht runde, beispielsweise elliptische Außenumfangskontur auf. Dabei ist das Substrat 16 mit zu einer im Wesentlichen in der Abflachungsrichtung A und in Richtung der Längs-Mittenachse L sich erstreckenden ersten Längs-Mittenebene E₁ symmetrischen, insbesondere spiegelsymmetrischen Außenumfangskontur ausgebildet. Diese erste Längs-Mittenebene E₁ schneidet das Substrat 16 in den beiden einander diametral gegenüberliegenden Bereichen 26 mit maximalem Krümmungsradius der Außenumfangskontur. Auch zu einer zweiten Längs-Mittenebene E₂, welche zur ersten Längs-Mittenebene E₁ orthogonal steht und ebenfalls die Längs-Mittenachse L enthält, ist das Substrat 16 mit symmetrischer, insbesondere spiegelsymmetrischer Außenumfangskontur ausgebildet. Die zweite Längs-Mittenebene E₂ schneidet den Außenumfang des Substrats 16 in einander diametral gegenüberliegenden Bereichen 28 mit minimalem Krümmungsradius der Außenumfangskontur des Substrats 16.

Beim Einbringen des Substrats 16 in das Gehäuse 12 bzw. die Umfangswandung 14 desselben wird zunächst das Substrat 16 mit zumindest einer Abstützmateriallage 30, beispielsweise Fasermatte oder dergleichen, umwickelt. Danach wird das so umwickelte Substrat 16 beispielsweise über einen Einführtrichter in das Gehäuse 12 eingeschoben. Dabei wird die Abstützmateriallage 30 komprimiert, so dass durch die komprimierte Abstützmateriallage 30 das Substrat 16 in definierter Positionierung im Inneren des Gehäuses 12 gehalten ist. Im Zuge dieser Einführbewegung wird auf das Substrat 16 in Übergangsbereichen 32 zwischen den Bereichen 28 mit minimalem Krümmungsradius und den Bereichen 26 mit maximalem Krümmungsradius die größte Flächenpressung auf das Substrat 16 ausgeübt. Da die Zellenwände 20, 22 bezüglich der Abflachungsrichtung A unter einem Winkel von etwa 45° angewinkelt verlaufen, erstreckt sich in jedem der Übergangsbereiche 32, in welchen die Außenumfangskontur des Substrats 16 einen mittleren Krümmungsradius aufweist, jeweils eine der beiden Arten von Zellenwänden 20, 22 näherungsweise senkrecht zu der von außen auf das Substrat 16 in diesen Bereichen einwirkenden Kraft F. Dies hat zur Folge, dass die in diesen Bereichen hoher Belastung auf das Substrat 16 einwirkenden Kräfte in den jeweiligen näherungsweise in der Krafteinleitungsrichtung sich erstreckenden Zellenwänden 20, 22 aufgenommen werden können, ohne dass eine wesentliche Verformung des Substrats 16 hervorgerufen wird, da in der Richtung der Krafteinleitung das Substrat 16 auch im Wesentlichen seine maximale Steifigkeit aufweist. Die Gefahr, dass durch derartige Belastungen eine Beschädigung, beispielsweise Risse im Substratkörper 18, hervorgerufen wird, ist somit wesentlich gemindert.

Es ist abschließend darauf hinzuweisen, dass bei Einsatz in einer Katalysatoreinheit der Substratkörper 18 an seinen die Zellen 24 umgrenzenden Zellenwänden 20, 22 mit katalytisch wirksamem Material beschichtet sein kann. Das durch die Zellen 24 hindurchströmende Abgas kann somit im Bereich einer vergleichsweise großen Oberfläche im Inneren des Substratkörpers 18 zur Durchführung der katalytischen Reaktion in Wechselwirkung mit dem katalytischen Material treten, so dass eine derartige Katalysator einer beispielsweise als Oxidationskatalysator oder als SCR Katalysator wirksam sein kann.

## Patentansprüche

1. Substrat für eine Abgasbehandlungseinheit, insbesondere für eine Abgasanlage einer Brennkraftmaschine, umfassend einen in einer Substrat-Längsrichtung (S) langgestreckten Substratkörper (18), wobei der Substratkörper (18) in einer Abflachungsrichtung (A) im Wesentlichen orthogonal zur Substrat-Längsrichtung (S) abgeflacht ist, wobei in dem Substratkörper (18) eine Vielzahl von im Wesentlichen in der Substrat-Längsrichtung (S) sich erstreckenden, Strömungskanäle bereitstellenden Zellen (24) gebildet ist, wobei die Zellen (24) von im Wesentlichen in der Substrat-Längsrichtung (S) verlaufenden Zellenwänden (20, 22) begrenzt sind, wobei die Zellenwände (20, 22) bezüglich der Abflachungsrichtung (A) angewinkelt sind.

2. Substrat nach Anspruch 1, **dadurch gekennzeichnet, dass** zueinander parallele und mit Abstand zueinander angeordnete erste Zellenwände (20) und zueinander parallele und mit Abstand zueinander angeordnete zweite Zellenwände (22) vorgesehen sind, wobei die ersten Zellenwände (20) bezüglich der zweiten Zellenwände (22) angewinkelt sind, derart, dass die Zellen (24) jeweils von zwei ersten Zellenwänden (20) und zwei zweiten Zellenwänden (22) umgrenzt sind.

3. Substrat nach Anspruch 2, **dadurch gekennzeichnet, dass** die ersten Zellenwände (20) bezüglich der zweiten Zellenwände (22) unter einem Winkel von etwa 90° angewinkelt sind.

4. Substrat nach Anspruch 2 oder 3, **dadurch gekennzeichnet, dass** der gegenseitige Abstand unmittelbar benachbarter erster Zellenwände (20) zueinander im Wesentlichen dem gegenseitigen Abstand unmittelbar benachbarter zweiter Zellenwände (22) zueinander entspricht.

5. Substrat nach einem der Ansprüche 2-4, **dadurch gekennzeichnet, dass** Zellenlinien (L₁, L₂) mit zueinander benachbarten Zellen (24) gebildet sind, wobei die Zellen (24) einer Zellenlinie (L₁, L₂) durch die beiden gleichen ersten Zellenwände (20) oder die beiden gleichen zweiten Zellenwände (22) begrenzt sind.

6. Substrat nach einem der Ansprüche 2-5, **dadurch gekennzeichnet, dass** die ersten Zellenwände (20) und zweite Zellenwände (22) eine gitterartige Zellenwandstruktur bilden, oder/und dass die ersten Zellenwände (20) und die zweiten Zellenwände (22) im Wesentlichen ungekrümmt sind.

7. Substrat nach einem der vorangehenden Ansprüche, **dadurch gekennzeichnet, dass** die Zellen (24) eine im Wesentlichen rechteckige, vorzugsweise quadratische Querschnittskontur aufweisen, oder/und dass die Zellenwände (20, 22) bezüglich der Abflachungsrichtung (A) in einem Bereich von 40° bis 50°, vorzugsweise mit etwa 45°, angewinkelt sind.

8. Substrat nach einem der vorangehenden Ansprüche, **dadurch gekennzeichnet, dass** der Substratkörper (18) mit bezüglich einer in der Abflachungsrichtung (A) und in der Substrat-Längsrichtung (S) ausgedehnten ersten Längs-Mittenebene (E₁) im Wesentlichen spiegelsymmetrischer Außenumfangskontur ausgebildet ist, oder/und dass der Substratkörper (18) mit bezüglich einer orthogonal zur Abflachungsrichtung (A) und in der Substrat-Längsrichtung (S) ausgedehnten zweiten Längs-Mittenebene (E₂) im Wesentlichen spiegelsymmetrischer Außenumfangskontur ausgebildet ist,

9. Substrat nach einem der vorangehenden Ansprüche, **dadurch gekennzeichnet, dass** der Substratkörper (18) eine abgeflacht runde, vorzugsweise im Wesentlichen elliptische Außenumfangskontur aufweist, oder/und dass der Substratkörper (18) bezüglich der Substrat-Längsrichtung (S) im Wesentlichen zylindrisch ausgebildet ist.

10. Substrat nach einem der vorangehenden Ansprüche, **dadurch gekennzeichnet, dass** der Substratkörper (18) mit Keramikmaterial aufgebaut ist, oder/und dass die Zellenwände (20, 22) mit Abgasbehandlungsmaterial, vorzugsweise Katalysatormaterial, beschichtet sind.

11. Abgasbehandlungseinheit, insbesondere für eine Abgasanlage einer Brennkraftmaschine, umfassend ein Gehäuse (12) mit einer einen Gehäuseinnenraum umgebenden, rohrartigen Umfangswandung (14) und wenigstens ein in dem Innenraum angeordnetes Substrat (16) nach einem der vorangehenden Ansprüche.

12. Abgasbehandlungseinheit nach Anspruch 11, **dadurch gekennzeichnet, dass** wenigstens ein, vorzugsweise jedes in dem Innenraum angeordnete Substrat (16) von wenigstens einer das Substrat (16) bezüglich der Umfangswandung abstützenden Abstützmateriallage (30) umgeben ist.

13. Abgasbehandlungseinheit nach Anspruch 11 oder 12, **dadurch gekennzeichnet, dass** die Umfangswandung (14) in der Abflachungsrichtung (A) abgeflacht ist, oder/und dass die Umfangswandung (14) eine abgeflacht runde, vorzugsweise im Wesentlichen elliptische Außenumfangskontur aufweist.
